# EUROPEAN PATENT APPLICATION

(11) **EP 4 664 625 A1**
(43) Date of publication of application: **17.12.2025**
(21) Application number: 24877356.6
(22) Date of filing: 08.07.2024
(51) Int. Cl.: H01M 50/183, H01M 50/105, H01M 50/184

(54) **SECONDARY BATTERY POCKET PORTION SEALING DEVICE AND SECONDARY BATTERY POCKET PORTION SEALING METHOD USING SAME**

(30) Priority: 11.10.2023 KR 20230134986
(71) Applicant: LG Energy Solution, Ltd., Seoul 07335 (KR)
(72) Inventor: JU, Hyeon Min, Daejeon 34122 (KR); OH, Jung Su, Daejeon 34122 (KR); BAEK, Ju Hwan, Daejeon 34122 (KR); KIM, Ki Su, Daejeon 34122 (KR); HWANG, Seung Jin, Daejeon 34122 (KR)
(74) Representative: Plasseraud IP
(86) International application number: PCT/KR2024/009658
(87) International publication number: WO 2025/079817

(57) **Abstract**

Disclosed are a secondary battery pocket portion sealing apparatus for sealing a sealing portion of a second pocket portion for gas capture, the secondary battery pocket portion sealing apparatus including a first sealing unit including a first sealing tool disposed on one side of the sealing portion so as to press and heat the sealing portion such that the sealing portion is sealed, a friction pad portion connected to the first sealing tool, the friction pad portion including a first friction pad and a second friction pad disposed at both ends of one surface of the sealing portion, and a driving member configured to move the first sealing tool and the friction pad portion to one side or the other side, and a second sealing unit including a second sealing tool disposed on the other side of the sealing portion so as to press and heat the sealing portion such that the sealing portion is sealed, and a secondary battery pocket portion sealing method using the same.

## Description

### [Technical Field]

This application claims the benefit of priority to Korean Patent Application No. 2023-0134986 filed on October 11, 2023, the disclosure of which is incorporated herein by reference in its entirety.

The present invention relates to a secondary battery pocket portion sealing apparatus and a secondary battery pocket portion sealing method using the same, and more particularly to a secondary battery pocket portion sealing apparatus that seals a sealing portion of a gas pocket portion for gas capture while pulling both ends of the sealing portion and a secondary battery pocket portion sealing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, or a pouch-shaped battery having an electrode assembly mounted in a pouch-shaped case made of an aluminum laminate sheet.

A typical pouch-shaped lithium secondary battery manufacturing process includes inserting an electrode assembly into a receiving space of a battery case made of a laminated sheet, filling the battery case with an electrolyte, sealing the battery case, and performing an activation process.

Meanwhile, during the activation process, a large amount of gas is generated due to chemical reaction and side reaction between the electrolyte and electrodes, and in order to capture the gas, the battery case is provided with a space for gas capture in addition to the space configured to receive the electrode assembly.

Sealing performed before the activation process is sealing a port for injection of the electrolyte, which is commonly referred to as V-Sealing.

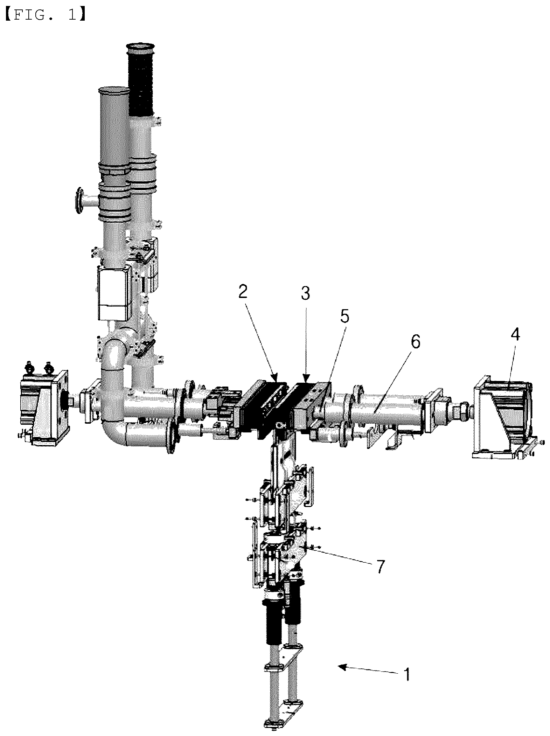

FIG. 1 is a view illustrating a conventional apparatus for sealing a gas pocket portion of a battery case. Referring to FIG. 1, the conventional sealing apparatus includes an up-down driving unit 1 configured to move a pouch upward and downward, a heater block 2 configured to move forward and backward, a pair of press blocks 3 configure to thermally fuse an opening of the pouch using the heater block 2, a cylinder 4 configured to move forward and backward, a rod 5 configured to move forward and backward, a rod housing 6, and a jig plate 7.

However, if the opening of the pouch is not closed or sealed surfaces facing each other are not aligned with each other, wrinkles may occur in the sealing portion.

### (Prior Art Document)

(Patent Document 1) Korean Patent Application Publication No. 10-2017-0062402

### [Disclosure]

### [Technical Problem]

The present invention has been made in view of the above problems, and it is an object of the present invention to provide a secondary battery pocket portion sealing apparatus having a function capable of preventing wrinkles in a secondary battery pocket portion when sealing the pocket portion and a secondary battery pocket portion sealing method using the same.

### [Technical Solution]

As a technical means for achieving the above object, a secondary battery pocket portion sealing apparatus according to an embodiment of the present invention, which is a secondary battery pocket portion sealing apparatus for sealing a sealing portion (11c) of a second pocket portion (11b) for gas capture, includes a first sealing unit comprising a first sealing tool (110) disposed on one side of the sealing portion (11c) so as to press and heat the sealing portion (11c) such that the sealing portion is sealed, a friction pad portion (120) connected to the first sealing tool (110), the friction pad portion including a first friction pad (121) and a second friction pad (122) disposed at both ends of one surface of the sealing portion (11c), and a driving member (130) configured to move the first sealing tool (110) and the friction pad portion (120) to one side or the other side, and a second sealing unit (200) including a second sealing tool (210) disposed on the other side of the sealing portion (11c) so as to press and heat the sealing portion (11c) such that the sealing portion is sealed.

Also, in the secondary battery pocket portion sealing apparatus according to the embodiment of the present invention, the first friction pad (121) may be disposed on one side of the one surface of the sealing portion (11c) and be configured to apply force to the first friction pad to pull the sealing portion (11c) to one side after contact with the one surface of the sealing portion (11c), and the second friction pad (122) may be disposed on the other side of the one surface of the sealing portion (11c) and be configured to apply force to the second friction pad to pull the sealing portion (11c) to the other side after contact with the one surface of the sealing portion (11c).

Also, in the secondary battery pocket portion sealing apparatus according to the embodiment of the present invention, the first friction pad (121) and the second friction pad (122) may be located closer to the sealing portion (11c) than the first sealing tool (110) so as to come into contact with the sealing portion (11c) before the first sealing tool (110).

Also, in the secondary battery pocket portion sealing apparatus according to the embodiment of the present invention, the driving member (130) may include a cylinder (131), a first sealing tool rod (132) connected to the cylinder (131) on one side and the first sealing tool (110) on the other side, the first sealing tool rod being configured to provide driving force to the first sealing tool (110) such that the first sealing tool can be moved to one side or the other side, a first friction pad rod (133) connected to the first sealing tool rod (132) on one side and the first friction pad (121) on the other side, and a second friction pad rod (134) connected to the first sealing tool rod (132) on one side and the second friction pad (122) on the other side.

Also, the secondary battery pocket portion sealing apparatus according to the embodiment of the present invention may include an elastic portion (140) including a first elastic unit (141) interposed between the first sealing tool rod (132) and the first friction pad rod (133), the first elastic unit being configured to provide rotational elastic force to the first friction pad rod (133), and a second elastic unit (142) interposed between the first sealing tool rod (132) and the second friction pad rod (134), the second elastic unit being configured to provide rotational elastic force to the second friction pad rod (134).

Also, in the secondary battery pocket portion sealing apparatus according to the embodiment of the present invention, when the first friction pad rod (133) is further moved by the driving member (130) after the first friction pad (121) comes into contact with the one surface of the sealing portion (11c), the first friction pad rod may be configured to turn in an outward direction by the first elastic unit (141).

Also, in the secondary battery pocket portion sealing apparatus according to the embodiment of the present invention, when the first friction pad rod (133) is turned in the outward direction, the first elastic unit (141) may be configured to apply elastic restoring force between the first friction pad rod (133) and the first sealing tool rod (132) such that the first friction pad rod (133) is restored to an initial state thereof.

Also, in the secondary battery pocket portion sealing apparatus according to the embodiment of the present invention, when the second friction pad rod (134) is further moved by the driving member (130) after the second friction pad (122) comes into contact with the one surface of the sealing portion (11c), the second friction pad rod may be configured to turn in the outward direction by the second elastic unit (142).

Also, in the secondary battery pocket portion sealing apparatus according to the embodiment of the present invention, when the second friction pad rod (134) is turned in the outward direction, the second elastic unit (142) may be configured to apply elastic restoring force between the second friction pad rod (134) and the first sealing tool rod (132) such that the second friction pad rod (134) is restored to an initial state thereof.

Also, in the secondary battery pocket portion sealing apparatus according to the embodiment of the present invention, the second sealing unit (200) may further include a guide (220) disposed on the other surface of the sealing portion (11c), the guide being configured to touch the first friction pad (121) and the second friction pad (122) in the state in which the sealing portion (11c) is disposed therebetween when the first friction pad (121) and the second friction pad (122) are in contact with the one surface of the sealing portion (11c).

Also, the secondary battery pocket portion sealing apparatus according to the embodiment of the present invention may further include a seating portion (300) configured to allow the battery case (11) to be seated thereon.

In addition, a secondary battery pocket portion sealing method using the secondary battery pocket portion sealing apparatus according to the embodiment of the present invention includes (S1) locating a battery case (11) between the first sealing unit (100) and the second sealing unit (200), (S2) moving the first sealing tool (110) and the friction pad portion (120) toward a sealing portion (11c) using the driving member (130), and (S3) pressing and heating the sealing portion (11c) to seal the sealing portion using the first sealing tool (110) and the second sealing tool (210).

Also, the secondary battery pocket portion sealing method according to the embodiment of the present invention may further include allowing the first friction pad (121) and the second friction pad (122) to come into contact with the sealing portion (11c) first to pull the sealing portion (11c) to opposite sides before step S3.

### [Advantageous Effects]

As is apparent from the above description, in a secondary battery pocket portion sealing apparatus according to the present invention and a secondary battery pocket portion sealing method using the same, a first friction pad and a second friction pad capable of coming into tight contact with each other are provided at both ends of one surface of a sealing portion, respectively, such that a sealing process is performed in the state in which both ends of the sealing portion are tightly pulled, whereby it is possible to prevent the occurrence of wrinkles in the sealing portion.

### [Description of Drawings]

FIG. 1 is a view illustrating a conventional apparatus for sealing a gas pocket portion of a battery case.
FIG. 2 is a view illustrating a secondary battery having a gas pocket portion.
FIG. 3 is a perspective view illustrating a secondary battery pocket portion sealing apparatus according to an embodiment of the present invention.
FIG. 4 is a sectional view illustrating the secondary battery pocket portion sealing apparatus according to the embodiment of the present invention.
FIG. 5 is a top view showing the state of a first sealing tool of the secondary battery pocket portion sealing apparatus according to the embodiment of the present invention before contact with a sealing portion.
FIG. 6 is a top view showing the state of the first sealing tool of the secondary battery pocket portion sealing apparatus according to the embodiment of the present invention in contact with the sealing portion.
FIG. 7 is a conceptual view illustrating a secondary battery in contact with the first sealing tool and a friction pad of the secondary battery pocket portion sealing apparatus according to the embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a secondary battery pocket portion sealing apparatus according to the present invention will be described. The secondary battery pocket portion sealing apparatus according to the present invention is a secondary battery pocket portion sealing apparatus for sealing a sealing portion 11c of a second pocket portion 11b for gas capture.

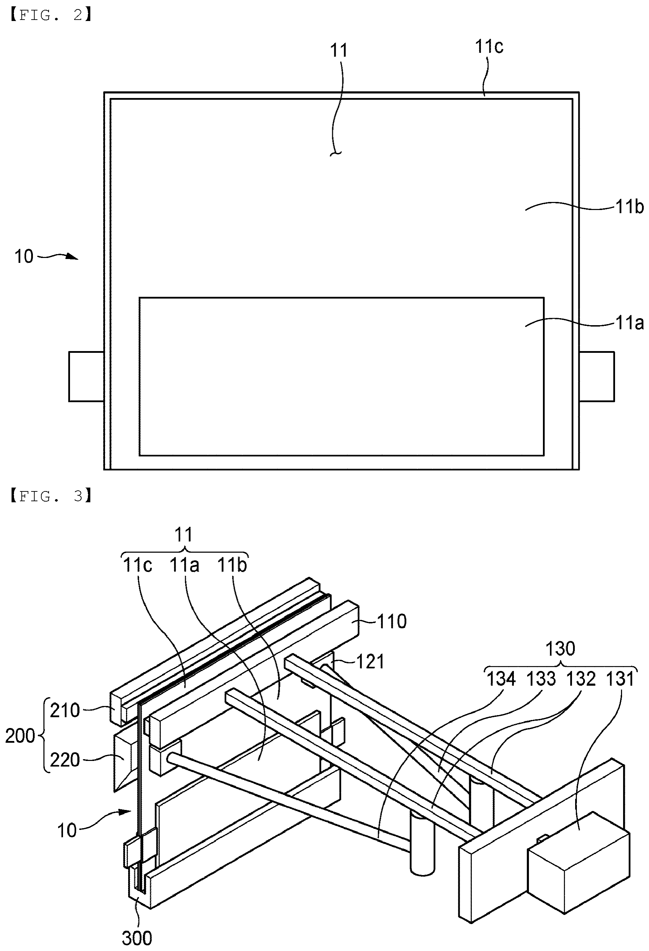

FIG. 2 is a view illustrating a secondary battery having a gas pocket portion.

Referring to FIG. 2, the secondary battery 10 according to the present invention includes a battery case 11 constituted by a first pocket portion 11a configured to receive an electrode assembly (not shown) in which a pair of electrode leads is located opposite each other, a second pocket portion 11b for gas capture, and a sealing portion 11c which is thermally fused.

Here, each of the first pocket portion 11a and the second pocket portion 11b of the battery case 11 is made of a laminate sheet including an outer covering layer, a metal layer, and an inner covering layer.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealing portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

The electrode assembly received in the first pocket portion 11a may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler may be further added if necessary.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

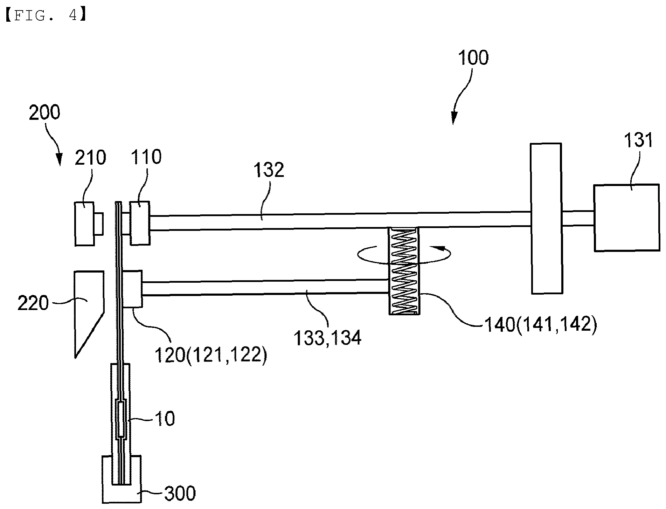

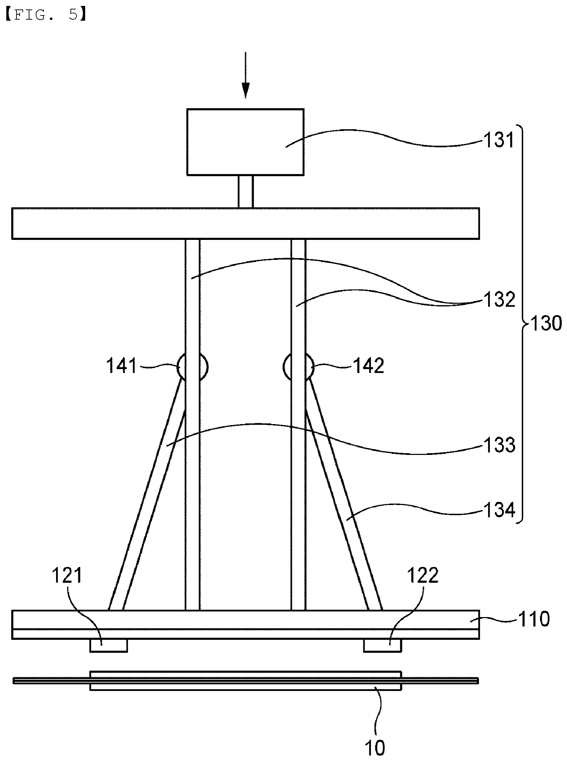

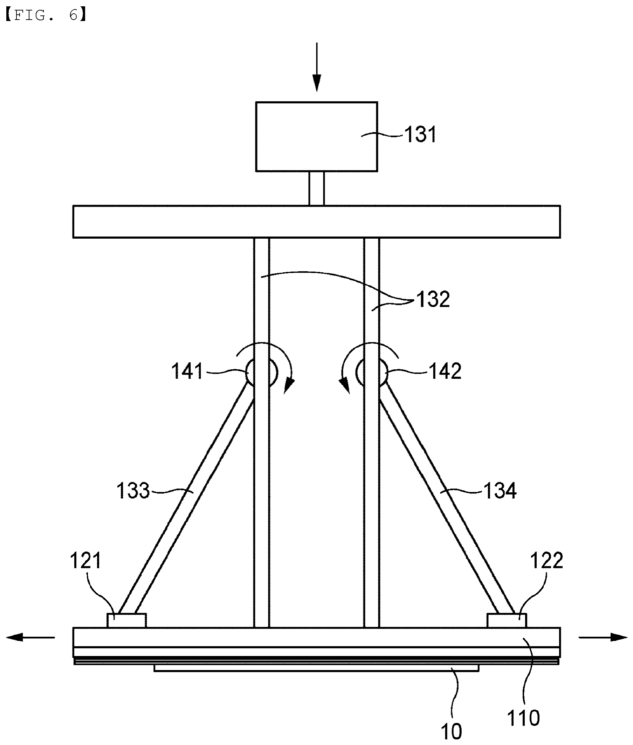

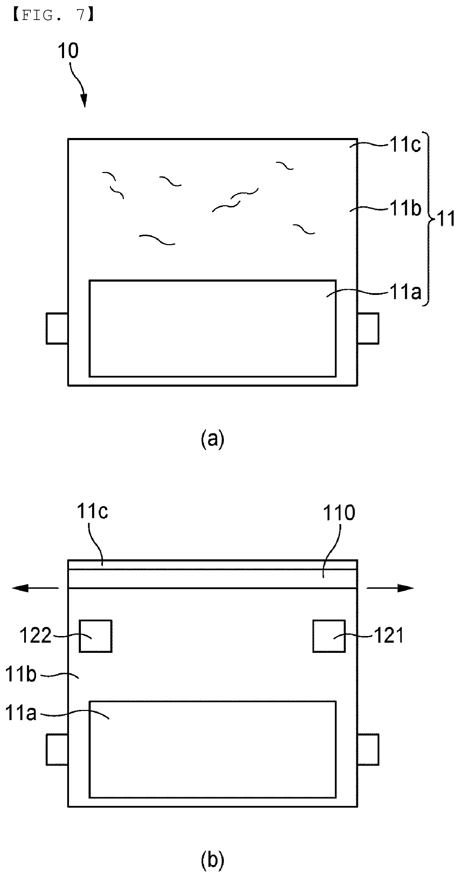

FIG. 3 is a perspective view illustrating a secondary battery pocket portion sealing apparatus according to an embodiment of the present invention, and FIG. 4 is a sectional view illustrating the secondary battery pocket portion sealing apparatus according to the embodiment of the present invention. In addition, FIG. 5 is a top view showing the state of a first sealing tool of the secondary battery pocket portion sealing apparatus according to the embodiment of the present invention before contact with a sealing portion, FIG. 6 is a top view showing the state of the first sealing tool of the secondary battery pocket portion sealing apparatus according to the embodiment of the present invention in contact with the sealing portion, and FIG. 7 is a conceptual view illustrating a secondary battery in contact with the first sealing tool and a friction pad of the secondary battery pocket portion sealing apparatus according to the embodiment of the present invention.

The secondary battery pocket portion sealing apparatus according to the present invention for sealing the sealing portion 11c of the battery case 11 having the above configuration may include a first sealing unit 100, a second sealing unit 200, and a seating portion 300.

First, the first sealing unit 100 may include a first sealing tool 110, a friction pad portion 120, a driving member 130, and an elastic portion 140. For example, the first sealing unit 100 may be disposed on one side of the sealing portion 11c.

The first sealing tool 110 may be disposed on one side of the sealing portion 11c (at the 3 o'clock in FIG. 4) so as to press and heat the sealing portion 11c of the secondary battery 10 such that the sealing portion is sealed.

Here, the length of the first sealing tool 110 is preferably equal to or greater than the length of the sealing portion 11c so as to be in tight contact with the entirety of the sealing portion 11c in a width direction.

The friction pad portion 120 may include a first friction pad 121 and a second friction pad 122 disposed at both ends of one surface of the sealing portion 11c.

The first friction pad 121 may be disposed on one side of one surface of the sealing portion 11c. For example, the first friction pad 121 may be disposed at the 2 o'clock position in FIG. 3. In addition, the second friction pad 122 may be disposed on the other side of one surface of the sealing portion 11c. For example, the second friction pad 122 may be disposed at the 8 o'clock position.

Here, each of the first friction pad 121 and the second friction pad 122 is preferably made of a material having excellent friction, more preferably a material having friction and certain elasticity, most preferably a material having friction, elasticity, and heat resistance. As an example, each of the first friction pad 121 and the second friction pad 122 may include a silicone material; however, the present invention is not particularly restricted as long as each pad is made of a material having the above features.

In addition, only the part of each of the first friction pad 121 and the second friction pad 122 in contact with the sealing portion 11c may be coated with a material having the above features.

The driving member 130 may move the first sealing tool 110 and the friction pad portion 120 to one side or the other side. For example, the driving member 130 may provide a forward motion to move the first sealing tool 110 to the other side (the 9 o'clock position in FIG. 4) where the sealing portion 11c is located and a backward motion to move the first sealing tool 110 to one side (the 3 o'clock position in FIG. 4) away from the sealing portion 11c.

Specifically, the driving member 130 includes a cylinder 131, a first sealing tool rod 132, a first friction pad rod 133, and a second friction pad rod 134.

First, the cylinder 131 may provide driving force to move the first sealing tool rod 132, the first friction pad rod 133, and the second friction pad rod 134 to one side or the other side.

The first sealing tool rod 132 may be connected to the cylinder 131 on one side and the first sealing tool 110 on the other side to provide driving force to the first sealing tool 110 such that the first sealing tool can be moved to one side or the other side.

For example, the first sealing tool rod 132 may be connected to a rear surface of the first sealing tool 110 to provide driving force to move the first sealing tool 110 forward or backward, whereby the first sealing tool 110 may press the sealing portion 11c.

Here, that the first sealing tool rod 132 provides driving force to the first sealing tool 110 may mean that the first sealing tool rod 132 provides driving force received through the cylinder 131 to the first sealing tool 110.

In addition, for example, the first sealing tool rod 132 may include one or more rods to support the first sealing tool 110.

The first friction pad rod 133 may be connected to the first sealing tool rod 132 on one side and the first friction pad 121 on the other side.

For example, the first friction pad rod 133 may be connected to the first sealing tool rod 132 to provide driving force provided by the cylinder 131 to the first friction pad 121 such that the first friction pad can be moved to one side or the other side.

Here, that the first friction pad rod 133 provides driving force to the first friction pad 121 may mean that the first friction pad rod 133 is connected to the first sealing tool rod 132 to provide driving force received from the cylinder 131 to the first friction pad 121.

As a result, the first friction pad rod 133 may provide driving force to the first friction pad 121 such that the first friction pad 121 comes into contact with one surface of the sealing portion 11c.

The first friction pad rod 133 may be provided with an axis partially extending to a lower side of the first sealing tool rod 132, and may be provided with an "L" shape extending to the other side from the extended axis, i.e., extending downward and then extending laterally. Accordingly, the first friction pad 121 may be located lower than the first sealing tool 110.

In addition, the first friction pad rod 133 may extend farther to the other side than the first sealing tool rod 132 such that the first friction pad 121 comes into contact with the sealing portion 11c ahead of the first sealing tool 110. Accordingly, the first friction pad 121 may be located closer to the sealing portion 11c than the first sealing tool 110.

In addition, for example, the first friction pad rod 133 may be turned relative to the first sealing tool rod 132 in an outward direction. For example, outward turning of the first friction pad rod 133 may be turning toward an outer edge of the sealing portion 11c rather than toward the center of the sealing portion. Referring to FIG. 3, for example, the outward turning of the first friction pad rod 133 may be turning in a clockwise direction.

Accordingly, after contact with one surface of the sealing portion 11c, force to pull the sealing portion 11c to one side may be applied to the first friction pad 121 by outward turning of the first friction pad rod 133.

Meanwhile, the second friction pad rod 134 may be connected to the first sealing tool rod 132 on one side and the second friction pad 122 on the other side.

For example, the second friction pad rod 134 may be connected to the first sealing tool rod 132 to provide driving force provided by the cylinder 131 to the second friction pad 122 such that the second friction pad can be moved to one side or the other side.

Here, that the second friction pad rod 134 provides driving force to the second friction pad 122 may mean that the second friction pad rod 134 is connected to the first sealing tool rod 132 to provide driving force received through the cylinder 131 to the second friction pad 122.

As a result, the second friction pad rod 134 may provide driving force to the second friction pad 122 such that the second friction pad 122 comes into contact with one surface of the sealing portion 11c.

The second friction pad rod 134 may be provided with an axis partially extending to the lower side of the first sealing tool rod 132, and may be provided with an "L" shape extending to the other side from the extended axis, i.e., extending downward and then extending laterally. Accordingly, the second friction pad 122 may be located lower than the first sealing tool 110.

In addition, the second friction pad rod 134 may extend farther to the other side than the first sealing tool rod 132 such that the second friction pad 122 comes into contact with the sealing portion 11c ahead of the first sealing tool 110. Accordingly, the second friction pad 122 may be located closer to the sealing portion 11c than the first sealing tool 110.

In addition, for example, the second friction pad rod 134 may be turned relative to the first sealing tool rod 132 in the outward direction. For example, outward turning of the second friction pad rod 134 may be turning toward the outer edge of the sealing portion 11c rather than toward the center of the sealing portion. Referring to FIG. 3, for example, the outward turning of the second friction pad rod 134 may be turning in a counterclockwise direction.

Accordingly, after contact with one surface of the sealing portion 11c, force to pull the sealing portion 11c to one side may be applied to the second friction pad 122 by turning of the second friction pad rod 134.

Next, the elastic portion 140 may include a first elastic unit 141 and a second elastic unit 142.

The first elastic unit 141 may be interposed between the first sealing tool rod 132 and the first friction pad rod 133 to provide rotational elastic force to the first friction pad rod 133.

For example, the first elastic unit 141 may be provided on an axis of the first friction pad rod 133 to provide rotational elastic force to the first friction pad rod 133.

Here, the first elastic unit 141 may be configured as a torsion spring; however, the present invention is not limited thereto.

When the first elastic unit 141 is further moved by the driving member 130 after the first friction pad 121 comes into contact with one surface of the sealing portion 11c, the first friction pad rod 133 may be turned in the outward direction.

Here, the further movement may be provided by the driving member 130 for contact between the first sealing tool 110 and one surface of the sealing portion 11c after the first friction pad 121 comes into contact with one surface of the sealing portion 11c.

In addition, the first elastic unit 141 may apply elastic restoring force between the first friction pad rod 133 and the first sealing tool rod 132 such that, when the first friction pad rod 133 is turned in the outward direction, the first friction pad rod 133 is restored to the initial state thereof.

For example, the initial state of the first friction pad rod 133 may be the state of the first friction pad rod 133 when the first friction pad 121 is not in contact with one surface of the sealing portion 11c.

In addition, the second elastic unit 142 may be interposed between the first sealing tool rod 132 and the second friction pad rod 134 to provide rotational elastic force to the second friction pad rod 134.

For example, the second elastic unit 142 may be provided on an axis of the second friction pad rod 134 to provide rotational elastic force to the second friction pad rod 134.

Here, the second elastic unit 142 may be configured as a torsion spring, as in the first elastic unit 141; however, the present invention is not limited thereto.

When the second elastic unit 142 is further moved by the driving member 130 after the second friction pad 122 comes into contact with one surface of the sealing portion 11c, the second friction pad rod 134 may be turned in the outward direction.

Here, the further movement may be provided by the driving member 130 for contact between the first sealing tool 110 and one surface of the sealing portion 11c after the second friction pad 122 comes into contact with one surface of the sealing portion 11c.

In addition, the second elastic unit 142 may apply elastic restoring force between the second friction pad rod 134 and the first sealing tool rod 132 such that, when the second friction pad rod 134 is turned in the outward direction, the second friction pad rod 134 is restored to the initial state thereof.

For example, the initial state of the second friction pad rod 134 may be the state of the second friction pad rod 134 when the second friction pad 122 is not in contact with one surface of the sealing portion 11c.

The second sealing unit 200 may include a second sealing tool 210 and a guide 220. The second sealing unit 200 may be disposed on the other side of the sealing portion 11c.

The second sealing tool 210 may be disposed on the other side of the sealing portion 11c (at the 9 o'clock in FIG. 4) so as to press and heat the sealing portion 11c such that the sealing portion is sealed.

That is, the first sealing tool 110 and the second sealing tool 210 may be disposed so as to touch each other in the state in which the sealing portion 11c is disposed therebetween in order to press and heat the sealing portion 11c such that the sealing portion is sealed.

Here, the length of the second sealing tool 210 is preferably equal to or greater than the length of the sealing portion 11c so as to be in tight contact with the entirety of the sealing portion 11c in the width direction.

Meanwhile, the first sealing tool 110 and the second sealing tool 210 of the sealing apparatus according to the present invention are obvious to those skilled in the art, and therefore a more detailed description thereof will be omitted.

The guide 220 is disposed on the other surface of the sealing portion 11c, and may be configured to touch the first friction pad 121 and the second friction pad 122 in the state in which the sealing portion 11c is disposed therebetween when the first friction pad 121 and the second friction pad 122 are in contact with one surface of the sealing portion 11c. That is, the guide 220 may be disposed so as to correspond with the first friction pad 121 and the second friction pad 122.

For example, the guide 220 may be disposed on the other surface of the sealing portion 11c such that, when the first friction pad 121 and the second friction pad 122 come into contact with one surface of the sealing portion 11c, the first friction pad and the second friction pad cannot move forward any longer.

Next, the seating portion 300 may be configured to allow the battery case 11 to be seated thereon.

For example, the seating portion 300 may be shaped with a depression in the center thereof such that the sealing portion 11c of the battery case 11 is seated and fixed in an upright position so as to face upward.

Of course, it is obvious that the seating portion 300 performs a function of preventing the movement of the secondary battery 10 when the sealing portion 11c is sealed by the first sealing unit 100 and the second sealing unit 200.

In addition, for example, the seating portion 300 may include a seating portion driving unit (not shown) configured to move the secondary battery 10 upward and downward such that the sealing portion 11c of the secondary battery 10 is located between the first sealing unit 100 and the second sealing unit 200.

Hereinafter, a secondary battery pocket portion sealing method using the secondary battery pocket portion sealing apparatus according to the embodiment of the present invention will be described with reference to FIGs. 3 to 7.

The secondary battery pocket portion sealing method according to the present invention includes (S1) locating a battery case 11 between the first sealing unit 100 and the second sealing unit 200, (S2) moving the first sealing tool 110 and the friction pad portion 120 toward a sealing portion 11c using the driving member 130, and (S3) pressing and heating the sealing portion 11c to seal the sealing portion using the first sealing tool 110 and the second sealing tool 210.

For example, in step S1, a secondary battery 10 may be seated on the seating portion 300, and the sealing portion 11c may be located between the first sealing unit 100 and the second sealing unit 200 using the seating portion driving unit (not shown).

In step S2, the first friction pad 121 and the second friction pad 122 may come into contact with the sealing portion 11c ahead of the first sealing tool 110 to pull the sealing portion 11c to opposite sides.

This will be described in more detail with reference to FIGs. 5 to 8. In step S2, the first sealing tool rod 132, the first friction pad rod 133, and the second friction pad rod 134 are moved to the other side by the cylinder 131, whereby the first sealing tool 110 and the friction pad portion 120 may be moved toward the sealing portion 11c.

At this time, the first friction pad 121 and the second friction pad 122 may be closer to the sealing portion 11c than the first sealing tool 110, whereby the first friction pad and the second friction pad may come into contact with the sealing portion 11c ahead of the first sealing tool 110.

After the first friction pad 121 and the second friction pad 122 come into contact with one surface of the sealing portion 11c, the first friction pad rod 133 and the second friction pad rod 134 may be further moved by the cylinder 131, whereby the first friction pad rod and the second friction pad rod may be turned in the outward direction by the first elastic unit 141 and the second elastic unit 142, respectively.

Here, the further movement may be provided by the cylinder 131 for contact between the first sealing tool 110 and one surface of the sealing portion 11c after the first friction pad 121 and the second friction pad 122 come into contact with one surface of the sealing portion 11c.

When the first friction pad 121 and the second friction pad 122 come into contact with one surface of the sealing portion 11c and touch the guide 220 located on the other surface of the sealing portion 11c, the first friction pad rod 133 and the second friction pad rod 134 may not be moved forward any longer and may be turned in the outward direction by the first elastic unit 141 and the second elastic unit 142, respectively.

Accordingly, the first friction pad 121 and the second friction pad 122 may come into contact with the sealing portion 11c ahead of the first sealing tool 110 before the sealing portion 11c is thermally fused by the first sealing tool 110 and the second sealing tool 210, thereby pressing the sealing portion 11c first and pulling the sealing portion 11c to opposite sides to remove wrinkles from the sealing portion 11c.

In step S3, the first sealing tool 110 and the second sealing tool 210 may touch each other in the state in which the sealing portion 11c is disposed therebetween, and may heat and press the sealing portion 11c to a certain temperature such that the sealing portion 11c is thermally fused.

In addition, after step S3, the first elastic unit 141 may apply elastic restoring force between the first friction pad rod 133 and the first sealing tool rod 132 such that the first friction pad rod 133 is restored to the initial state thereof.

Similarly, the second elastic unit 142 may apply elastic restoring force between the second friction pad rod 134 and the first sealing tool rod 132 such that the second friction pad rod 134 is restored to the initial state thereof.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Secondary battery
11: Battery case
11a: First pocket portion 11b: Second pocket portion
11c: Sealing portion
100: First sealing unit
110: First sealing tool
120: Friction pad portion
121: First friction pad 122: Second friction pad
130: Driving member
131: Cylinder 132: First sealing tool rod
133: First friction pad rod 134: Second friction pad rod
140: Elastic portion
141: First elastic unit 142: Second elastic unit
200: Second sealing unit
210: Second sealing tool 220: Guide
300: Seating portion

## Claims

1. A secondary battery pocket portion sealing apparatus for sealing a sealing portion of a second pocket portion for gas capture, the secondary battery pocket portion sealing apparatus comprising:
a first sealing unit comprising a first sealing tool disposed on one side of the sealing portion so as to press and heat the sealing portion such that the sealing portion is sealed, a friction pad portion connected to the first sealing tool, the friction pad portion comprising a first friction pad and a second friction pad disposed at both ends of one surface of the sealing portion, and a driving member configured to move the first sealing tool and the friction pad portion to one side or the other side; and
a second sealing unit comprising a second sealing tool disposed on the other side of the sealing portion so as to press and heat the sealing portion such that the sealing portion is sealed.

2. The secondary battery pocket portion sealing apparatus according to claim 1, wherein
the first friction pad is disposed on one side of the one surface of the sealing portion and is configured to apply force to the first friction pad to pull the sealing portion to one side after contact with the one surface of the sealing portion, and
the second friction pad is disposed on the other side of the one surface of the sealing portion and is configured to apply force to the second friction pad to pull the sealing portion to the other side after contact with the one surface of the sealing portion.

3. The secondary battery pocket portion sealing apparatus according to claim 1, wherein the first friction pad and the second friction pad are located closer to the sealing portion than the first sealing tool so as to come into contact with the sealing portion before the first sealing tool.

4. The secondary battery pocket portion sealing apparatus according to claim 1, wherein the driving member comprises:
a cylinder;
a first sealing tool rod connected to the cylinder on one side and the first sealing tool on the other side, the first sealing tool rod being configured to provide driving force to the first sealing tool such that the first sealing tool can be moved to one side or the other side;
a first friction pad rod connected to the first sealing tool rod on one side and the first friction pad on the other side; and
a second friction pad rod connected to the first sealing tool rod on one side and the second friction pad on the other side.

5. The secondary battery pocket portion sealing apparatus according to claim 4, comprising an elastic portion, the elastic portion comprising:
a first elastic unit interposed between the first sealing tool rod and the first friction pad rod, the first elastic unit being configured to provide rotational elastic force to the first friction pad rod; and
a second elastic unit interposed between the first sealing tool rod and the second friction pad rod, the second elastic unit being configured to provide rotational elastic force to the second friction pad rod.

6. The secondary battery pocket portion sealing apparatus according to claim 5, wherein, when the first friction pad rod is further moved by the driving member after the first friction pad comes into contact with the one surface of the sealing portion, the first friction pad rod is configured to turn in an outward direction by the first elastic unit.

7. The secondary battery pocket portion sealing apparatus according to claim 6, wherein, when the first friction pad rod is turned in the outward direction, the first elastic unit is configured to apply elastic restoring force between the first friction pad rod and the first sealing tool rod such that the first friction pad rod is restored to an initial state thereof.

8. The secondary battery pocket portion sealing apparatus according to claim 5, wherein, when the second friction pad rod is further moved by the driving member after the second friction pad comes into contact with the one surface of the sealing portion, the second friction pad rod is configured to turn in an outward direction by the second elastic unit.

9. The secondary battery pocket portion sealing apparatus according to claim 8, wherein, when the second friction pad rod is turned in the outward direction, the second elastic unit is configured to apply elastic restoring force between the second friction pad rod and the first sealing tool rod such that the second friction pad rod is restored to an initial state thereof.

10. The secondary battery pocket portion sealing apparatus according to claim 1, wherein the second sealing unit further comprises a guide disposed on the other surface of the sealing portion, the guide being configured to touch the first friction pad and the second friction pad in a state in which the sealing portion is disposed therebetween when the first friction pad and the second friction pad are in contact with the one surface of the sealing portion.

11. The secondary battery pocket portion sealing apparatus according to claim 1, further comprising a seating portion configured to allow the battery case to be seated thereon.

12. A secondary battery pocket portion sealing method using the secondary battery pocket portion sealing apparatus according to any one of claims 1 to 11, the secondary battery pocket portion sealing method comprising:
(S1) locating a battery case between the first sealing unit and the second sealing unit;
(S2) moving the first sealing tool and the friction pad portion toward a sealing portion using the driving member; and
(S3) pressing and heating the sealing portion to seal the sealing portion using the first sealing tool and the second sealing tool.

13. The secondary battery pocket portion sealing method according to claim 12, further comprising allowing the first friction pad and the second friction pad to come into contact with the sealing portion first to pull the sealing portion to opposite sides before step S3.
